# EUROPEAN PATENT APPLICATION

(11) **EP 2 779 339 A1**
(43) Date of publication of application: **17.09.2014**
(21) Application number: 12848531.5
(22) Date of filing: 26.10.2012
(51) Int. Cl.: H02G 11/00, H02J 7/00

(54) **CABLE HOUSING DEVICE**

(30) Priority: 09.11.2011 JP 2011245376; 28.03.2012 JP 2012073452
(71) Applicant: Chuo Hatsujo Kabushiki Kaisha, Nagoya-shi, Aichi 458-8505 (JP)
(72) Inventor: IWAMI, Kenji, Nagoya-shi, Aichi 458-8505 (JP); MIZUNO, Eiji, Nagoya-shi, Aichi 458-8505 (JP); HIRATA, Yuichi, Nagoya-shi, Aichi 458-8505 (JP)
(74) Representative: Kramer - Barske - Schmidtchen
(86) International application number: PCT/JP2012/077746
(87) International publication number: WO 2013/069480

(57) **Abstract**

A cable housing apparatus disclosed in the present specification can house a charging cable serving as standard equipment in a trunk room in an organized state without a troublesome task. This cable housing apparatus houses a charging cable having a charging connector provided in one end, a plug provided in the other end, and a CCID provided between the charging connector and the plug. The cable housing apparatus has a holder, and a reel detachably attached to the holder. The reel has an outer peripheral surface on which the charging cable is capable of being wound, and a holding part capable of holding the CCID.

## Description

### [Technical Field]

The technique disclosed in the present specification relates to a cable housing apparatus for housing a charging cable. In detail, the technique relates to a cable housing apparatus for housing a charging cable to be used for charging an electric vehicle (EV) or a plug-in hybrid electric vehicle (PHEV).

### [Background Art]

As a conventional technique of this type of housing apparatus for housing a charging cable, there is a known cable housing apparatus of Japanese Patent Application Publication No. 2010-115037. This cable housing apparatus includes a charging cable to be used for charging an electric vehicle or a plug-in hybrid electric vehicle, and a box for housing the charging cable.

### [Summary of the Invention]

### [Problems to be Solved by the Invention]

Upon purchase of an electric vehicle or a plug-in hybrid electric vehicle, a charging cable serving as standard equipment is attached in general. In this charging cable serving as the standard equipment, a charging connector is provided in one end, a plug is provided in the other end, and a CCID (Charging Circuit Interrupt Device) is provided between the charging connector and the plug. This charging cable is for example housed in a trunk room and used when charging is required away from home, or housed in a home garage or the like and used when charging is required at home.

When the above charging cable serving as the standard equipment is housed in the trunk room or housed in the home garage or the like, it is recommended to house the charging cable within a bag such as a carrier bag. That is, it is recommended to roll up the charging cable, place the rolled charging cable into the bag, and house the charging cable within the bag. However, the electric vehicle or the like is highly frequently charged, unlike oil supply to a gasoline-driven vehicle. In a case where the electric vehicle or the like is used for commutation, charging is generally performed every day. Therefore, even though it is recommended, the charging cable is often not placed in the bag, and some may just disorderly shove the charging cable in a housing place without rolling up the charging cable. As a result, when other items are housed in the trunk room or in the garage, problems such as the charging cable being an obstruction are generated. It should be noted that in the cable housing apparatus of Japanese Patent Application Publication No. 2010-115037, the housing apparatus and a charging cable are exclusively designed, and the cable housing apparatus is not designed to house the charging cable serving as the standard equipment.

The present specification discloses a cable housing apparatus capable of housing a charging cable serving as standard equipment in a housing place in an organized state.

### [Means for Solving the Problems]

A cable housing apparatus disclosed in the present specification houses a charging cable having a charging connector provided in one end, a plug provided in the other end, and a CCID provided between the charging connector and the plug. This cable housing apparatus includes a reel having an outer peripheral surface on which the charging cable is capable of being wound.

This cable housing apparatus includes the reel having the outer peripheral surface on which the charging cable is capable of being wound. Therefore, the charging cable can be housed in a housing place such as a trunk room in a state where the charging cable is wound on the outer peripheral surface of the reel and organized.

### [Brief Description of the Drawings]

Fig. 1 is a front view of a cable housing apparatus of the present embodiment.
Fig. 2 is a vertically sectional view of the cable housing apparatus of Fig. 1.
Fig. 3 is a vertically sectional view showing exploded parts of the cable housing apparatus.
Fig. 4 is a front view of a reel.
Fig. 5 is a vertically sectional view of the reel shown in Fig. 4.
Fig. 6 is a front view of a support plate.
Fig. 7 is a perspective view of a cable housing apparatus of a second embodiment (part I).
Fig. 8 is a perspective view of the cable housing apparatus of the second embodiment (part II).
Fig. 9 is a schematic view showing an internal structure of the cable housing apparatus of the second embodiment.
Fig. 10 is a view showing a modified example of the second embodiment.
Fig. 11 is a view showing another modified example of the second embodiment.
Fig. 12 is a view showing still another modified example of the second embodiment.
Fig. 13 is a front view of a cable housing apparatus according to yet another modified example of the second embodiment.

### [Description of the Embodiments]

In a cable housing apparatus disclosed in the present specification, a reel may have a holding part capable of holding a CCID. With such a configuration, the CCID of a charging cable can be held on a holding part of the reel. Thus, the CCID is not suspended hanging from the cable at the time of charging, and a large tensile force can be prevented from being applied to the cable and the plug.

The above cable housing apparatus may further include a holder for rotatably supporting the reel. With such a configuration, by rotating the reel with respect to the holder, the charging cable can be pulled out and wound up. Since there is no need for directly touching the charging cable by a hand, hands do not get dirty by the dirty charging cable dirtied due to dust, rainwater, ground, and the like.

In the above cable housing apparatus, the reel may be detachably attached to the holder. With such a configuration, in a case where the charging cable is used both away from home and at home, the charging cable can be easily handled. That is, with such a configuration, the reel on which the charging cable is wound is attachable to and detachable from the holder. Therefore, the holder can be installed in a charging place (such as a home garage) and only the charging cable and the reel can be taken along. Thus, at the time of charging a battery at home or the like, the reel is attached to the holder installed in the charging place, and the charging cable is pulled out from the reel, so that charging can be performed. Meanwhile, when charging is finished, the charging cable is wound on the reel attached to the holder, then the reel is detached from the holder, and the charging cable can be housed in a trunk room all together with the reel. Since the charging cable can be housed in the trunk room in a state where the charging cable is wound on the reel, the charging cable can be prevented from being disordered in the trunk room. Since the charging cable can be pulled out from and wound up on the reel while the reel is attached to the holder, pull-out and take-up tasks of the charging cable can be easily performed.

In a case where the reel is rotatably attached to the holder, the holder may have a housing, a first connection part, a second connection part, and a slip ring. The first connection part may be provided to be rotatable with respect to the housing, and the plug of the charging cable may be detachably connected to the first connection part. The second connection part may be provided immovably with respect to the housing and connected to an external power source. The slip ring may be arranged between the first connection part and the second connection part, and the slip ring may electrically connect the first connection part and the second connection part.

In the cable housing apparatus of the above mode, the holder has the first connection part rotatable with respect to the housing. Therefore, while the plug of the charging cable is connected to the first connection part, the reel can be rotated and the charging cable can be pulled out and wound up. Since the slip ring is provided on the side of the holder, weight on the side of the reel to be taken along can be reduced.

In the cable housing apparatus of the above mode, further, the first connection part may have a rotation member rotatably supported by the housing, a first fitting part formed in the rotation member, and an insertion part formed in the rotation member, the insertion part into which the plug of the charging cable is inserted. In this case, the reel may have a second fitting part to be fitted to the first fitting part, and by fitting the first fitting part of the first connection part to the second fitting part of the reel, the reel and the first connection part may be integrated with each other and rotated with respect to the housing. With such a configuration, the reel and the rotation member are integrated with each other and rotated, and no position gap is generated between the reel and the rotation member. Torque can be transmitted from the reel to the rotation member via the first fitting part and the second fitting part. Therefore, no torque is generated between the plug of the charging cable and the first connection part, so that damage to the charging cable can be prevented.

In another mode of the above cable housing apparatus, the reel may have an adaptor to be rotatably attached to the holder, the adaptor to which the plug of the charging cable is detachably connected, and a reel side plug connected to the adaptor. The holder may have a housing, a third connection part, a fourth connection part, and a slip ring. The third connection part may be provided to be rotatable with respect to the housing, and the reel side plug may be detachably connected to the third connection part. The fourth connection part may be provided immovably with respect to the housing and connected to an external power source. The slip ring may be arranged between the third connection part and the fourth connection part, and the slip ring may electrically connect the third connection part and the fourth connection part. With such a configuration, since the charging cable is connected to the holder via the adaptor, the holding part for holding the CCID can be provided on the rotation axis line of the reel. Therefore, the diameter of the reel can be reduced.

### [Examples]

### (First Embodiment)

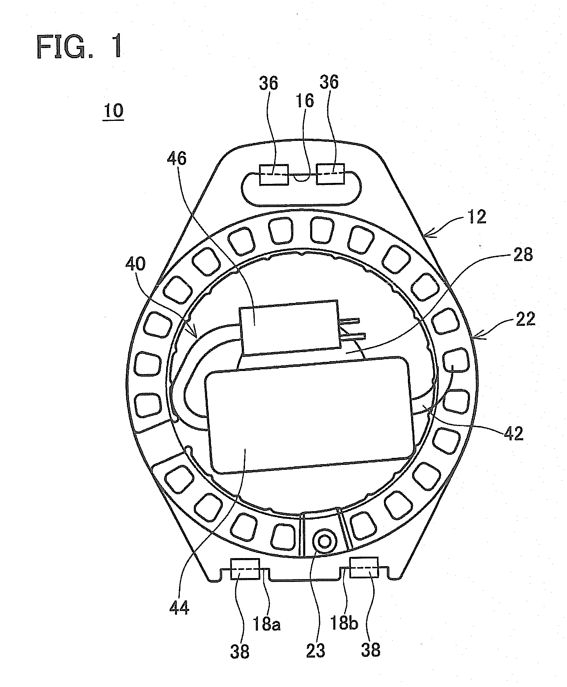

A cable housing apparatus 10 of the present embodiment is used for housing a charging cable to be standard-equipped for an electric vehicle (EV) or a plug-in hybrid electric vehicle (PHEV). As shown in Figs. 1 to 3, the cable housing apparatus 10 has a holder 32, a reel 22 detachably attached to the holder 32, and a support plate 12 attached to the reel 22.

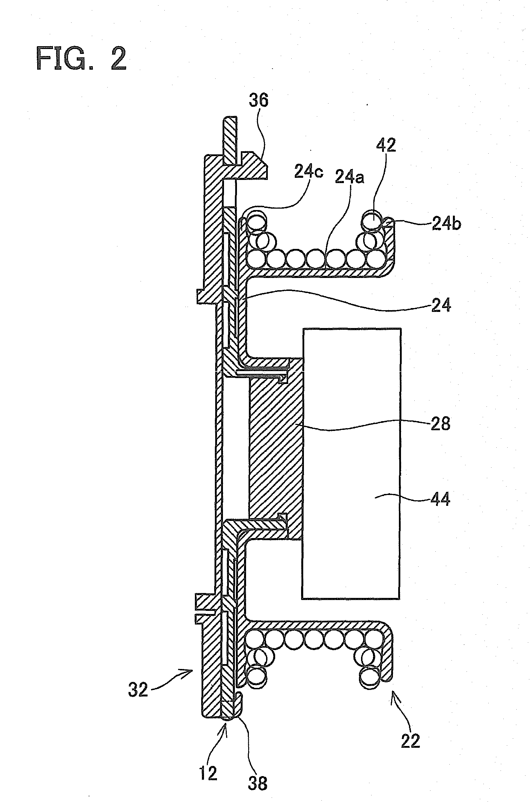

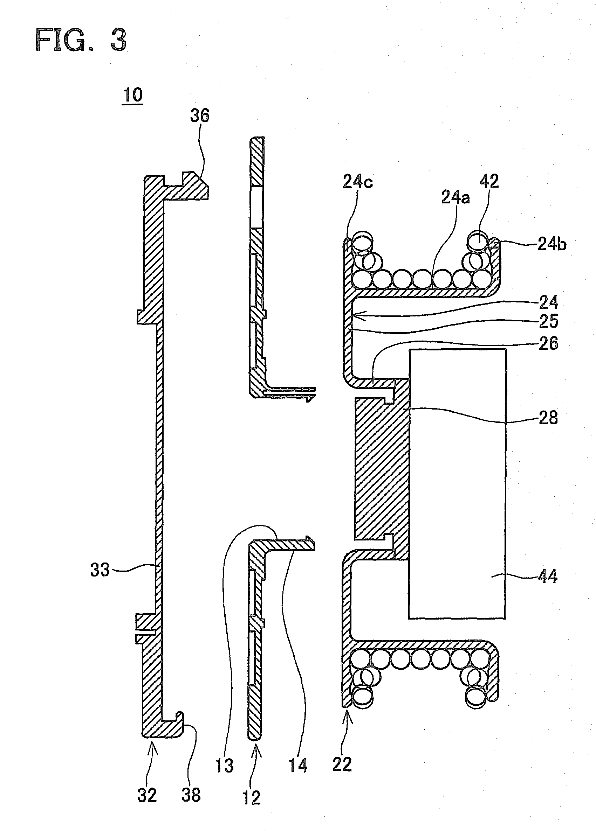

The holder 32 is made of resin. The holder 32 is installed on a wall surface or the like of a charging place (such as a home garage). As shown in Fig. 3, the holder 32 includes a housing 33. The housing 33 is a plate shape member, in which one surface is fixed to the wall surface or the like of the charging place, and the reel 22 is attached to the other surface (refer to Fig. 2 in particular). Hooks 36, 38 are provided on the surface of the housing 33 on the side of the reel 22. When the support plate 12 is attached to the holder 32, the hooks 36, 38 are respectively engaged with a through hole 16 and grooves 18a, 18b of the support plate 12.

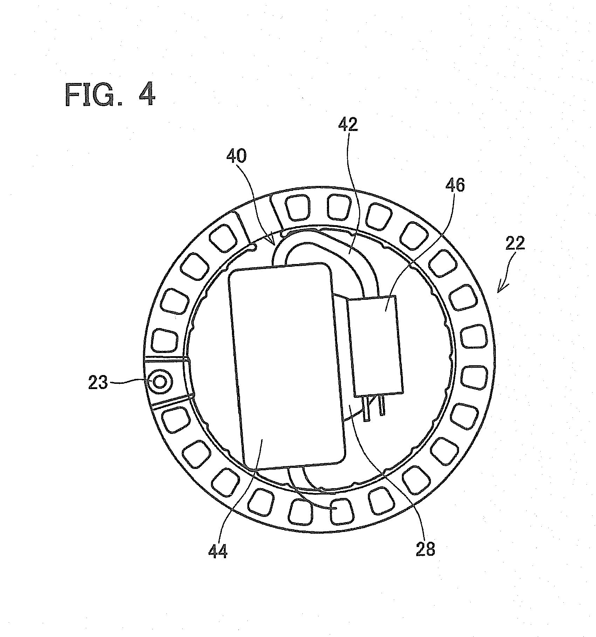

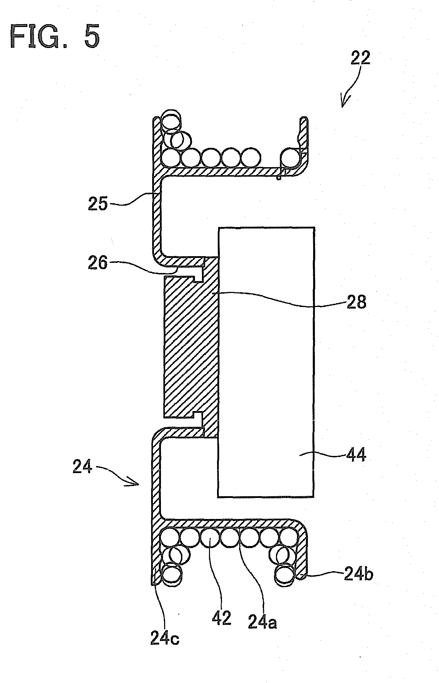

As shown in Figs. 3 to 5, the reel 22 includes a frame 24, and a holding member 28 attached to an inner peripheral edge of the frame 24. The frame 24 is formed in a cylindrical shape, and a cable main body 42 of a charging cable 40 is wound around an outer peripheral surface 24a thereof. As shown in Figs. 3, 5, walls 24b, 24c are formed on both ends of the outer peripheral surface 24a so as to project to the outer peripheral side. The walls 24b, 24c favorably prevent the charging cable 40 from dropping off of the outer peripheral surface 24a. That is, surfaces of the walls 24b, 24c to be abutted with the cable main body 42 (that is, inner surfaces) are formed as uneven surfaces as shown in Figs. 2, 3. Thereby, the cable main body 42 is prevented from going over the walls 24b, 24c and dropping off of the frame 24, that is, the cable main body 42 is prevented from dropping off of the outer peripheral surface 24a. As shown in Figs. 1, 4, an operation part 23 is formed in the wall 24b. The operation part 23 is a rod shape member, and a user can grip the operation part 23 to rotate the reel 22. Meanwhile, a wall 25 is formed on the inner peripheral side of a holder side end (left end shown in Figs. 3, 5) of the outer peripheral surface 24a. An inner peripheral part 26 of the wall 25 is bent to the non-holder side (right side of Fig. 5). The holding member (corresponding to a holding part in the claims) 28 is attached to a leading end of the inner peripheral part 26. When the holding member 28 is attached to the inner peripheral part 26, an opening of the wall 25 is closed by the holding member 28, and a part of the holding member 28 is positioned inside the inner peripheral part 26. The holding member 28 detachably holds a CCID 44 and a plug 46 of the charging cable 40 on a surface thereof on the non-holder side (right surface shown in Figs. 3, 5).

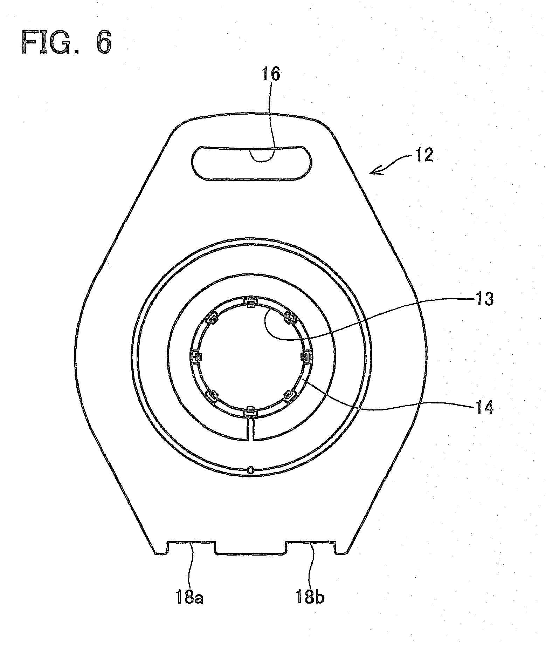

As shown in Figs. 1, 2, 3, 6, the support plate 12 is a plate shape member, in which the holder 32 is abutted with one surface and the reel 22 is abutted with the other surface (refer to Fig. 2 in particular). A through hole 13 is formed in the center of the support plate 12, and a support part 14 is formed around the through hole 13. The support part 14 projects to the side of the reel 22. The support part 14 is inserted into a gap between the inner peripheral part 26 of the reel 22 and the holding member 28, and a leading end thereof is engaged with the holding member 28 (refer to Fig. 2 in particular). When the leading end of the support part 14 is engaged with the holding member 28, a part of the holding member 28 is positioned inside the support part 14, and the reel 22 becomes rotatable with respect to the support part 14. The through hole 16 is formed in an upper end of the support plate 12, and the pair of grooves 18a, 18b is formed in a lower end. The through hole 16 is used when the user grips the support plate 12. That is, by hanging fingers onto the through hole 16, the user can grip the upper end of the support plate 12. The through hole 16 and the grooves 18a, 18b are used for supporting the reel 22 and the support plate 12 when the reel 22 is attached to the holder 32. That is, as shown in Fig. 2, when the reel 22 is attached to the holder 32, the hooks 36, 38 of the holder 32 are respectively engaged with the through hole 16 and the grooves 18a, 18b, so that the support plate 12 is supported.

Next, the charging cable 40 to be wound around the reel 22 will be described. The charging cable 40 is an attached charging cable to be standard-equipped for an electric vehicle (EV) or a plug-in hybrid electric vehicle (PHEV). The charging cable 40 has the cable main body 42, a charging connector (not shown) provided in one end of the cable main body 42, the plug 46 provided in the other end of the cable main body 42, and the CCID 44 provided in the middle of the cable main body 42. The charging connector is connectable to a power feeding port of the electric vehicle or the plug-in hybrid electric vehicle. When the charging connector is connected to the power feeding port of the vehicle, the charging cable 40 is connected to a battery mounted in the vehicle. The plug 46 is connectable to a connector part (such as an outlet) installed in the charging place. When the plug 46 is connected to the connector part of the charging place, an external power source and the charging cable 40 are connected. The CCID 44 is provided in the vicinity of the plug 46. The CCID 44 has a function of cancelling the connection between the external power source and the battery and stopping charging to the battery when charging is finished in a normal way or when a charging abnormality is generated.

Next, actions of the above cable housing apparatus 10 will be described. In the cable housing apparatus 10 of the present embodiment, the reel 22 is assembled to the support plate 12, the charging cable 40 is attached to the reel 22, and the support plate 12, the reel 22, and the charging cable 40 are taken along.

In order to assemble the reel 22 to the support plate 12, the leading end of the support part 14 of the support plate 12 is engaged with the holding member 28. When the reel 22 is assembled to the support plate 12, the reel 22 is rotatable with respect to the support plate 12. In order to attach the charging cable 40 to the reel 22, firstly, as shown in Figs. 1, 2, 4, 5, the CCID 44 and the plug 46 are attached to the holding member 28 of the reel 22. The CCID 44 and the plug 46 attached to the holding member 28 are housed on the inner peripheral side of the reel 22. The cable main body 42 extending toward the charging connector from the CCID 44 is pulled out to the outer peripheral surface 24a of the reel 22, and wound around the outer peripheral surface 24a of the reel 22. At the time of winding the cable main body 42 around the outer peripheral surface 24a of the reel 22, the user grabs the operation part 23 of the reel 22 by hand and rotates the reel 22 with respect to the support plate 12. Thereby, the user can wind the cable main body 42 around the reel 22 without directly touching the cable main body 42 by hand.

When the in-vehicle battery is charged by using the charging cable 40, firstly, the reel 22 and the support plate 12 are attached to the holder 32. Specifically, as shown in Fig. 2, the hooks 36, 38 of the holder 32 are engaged with the through hole 16 and the grooves 18a, 18b of the support plate 12. Thereby, the support plate 12 is non-rotatably attached to the holder 32. Since the reel 22 is rotatable with respect to the support plate 12, the reel 22 can be rotated with respect to the holder 32.

When the reel 22 and the support plate 12 are attached to the holder 32, firstly, the charging connector provided in the other end of the charging cable 40 is connected to the power feeding port of the vehicle. That is, the necessary length of the charging cable 40 is pulled out from the reel 22, and the charging connector on a leading end thereof is connected to the power feeding port of the vehicle. It should be noted that since the reel 22 is rotatable with respect to the holder 32, the user rotates the reel 22 only by grabbing and pulling the charging connector, so that the charging cable 40 is pulled out from the reel 22. Therefore, at the time of pulling out the charging cable 40, there is no need for directly touching the cable main body 42 by hand. When the charging connector is connected to the power feeding port of the vehicle, next, the plug 46 is removed from the holding member 28, and the plug 46 is connected to the connector part (such as an outlet) provided in the charging place. Thereby, the external power source and the in-vehicle battery are connected, and charging of the in-vehicle battery is started.

When charging to the in-vehicle battery is finished, firstly, the plug 46 is removed from the connector part (outlet) and attached to the holding member 28. Next, the charging connector is removed from the power feeding port of the vehicle, and the operation part 23 is operated to rotate the reel 22. Thereby, the charging cable 40 (cable main body 42) is wound up on the reel 22. Since the reel 22 is operated by the operation part 23, there is no need for directly touching the cable main body 42 by hand at the time of taking up the charging cable 40. After the charging cable 40 is wound up on the reel 22, the reel 22 and the support plate 12 are detached from the holder 32. That is, the hooks 36, 38 are disengaged from the through hole 16 and the grooves 18a, 18b. The reel 22 on which the charging cable 40 is wound and the support plate 12 are housed in a trunk room of the vehicle.

As is clear from the above description, in the cable housing apparatus 10 of the present embodiment, the holder 32 installed in the charging place is attachable to and detachable from the reel 22 (support plate 12 in detail), and the charging cable 40 is housed in the trunk room in a state where the charging cable is wound on the reel 22. Therefore, the charging cable 40 can be prevented from being disordered in the trunk room.

The charging cable 40 can be pulled out from and wound up on the reel 22 by rotating the reel 22 with respect to the holder 32. Therefore, the charging cable 40 can be pulled out and wound up by a simple task. At the time of pulling out the charging cable 40 from the reel 22 or at the time of taking up the charging cable 40 on the reel 22, there is no need for directly touching the charging cable 40 by hand. Therefore, even when the charging cable 40 is dirty, hands do not get dirty by this.

Further, since the CCID 44 is held by the holding member 28 of the reel 22 at the time of charging, the CCID 44 is not suspended from the cable main body 42. That is, when the plug 46 is inserted into the connector part (outlet) of the charging place in a state where the CCID 44 is not held by the reel 22, the CCID 44 is suspended from the cable main body 42. As a result, a large tensile force is applied to the cable main body 42, so that damage to the charging cable 40 is caused. In the cable housing apparatus 10 of the present embodiment, since the CCID 44 is held by the holding member 28, such a problem is not generated.

### (Second Embodiment)

In the cable housing apparatus 10 of the above first embodiment, the plug 46 of the charging cable 40 is inserted into the connector part (outlet) installed in the charging place. However, a cable housing apparatus 50 of a second embodiment is different at a point where the plug 46 of the charging cable 40 is connected to a holder, and the holder and the connector part (outlet) installed in the charging place are connected by another electric cable. It should be noted that at the other points, the cable housing apparatus has the substantially same configuration as the cable housing apparatus 10 of the first embodiment. Thus, parts different from the first embodiment will be mainly described.

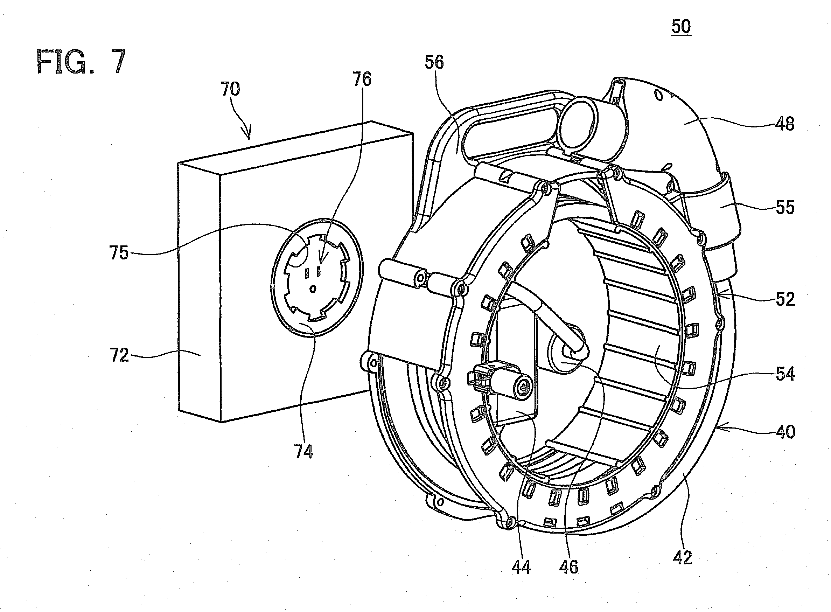

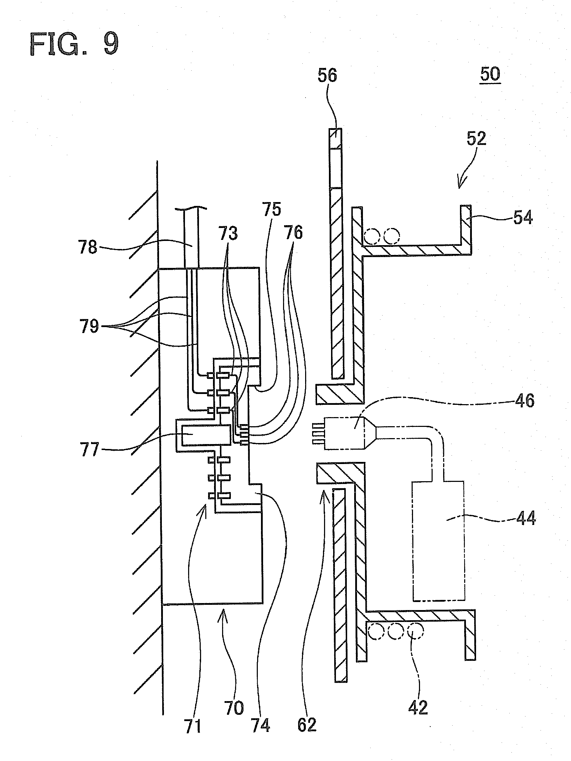

As shown in Figs. 7 to 9, the cable housing apparatus 50 has a holder 70, and a reel 52 attachable to and detachable from the holder 70. As shown in Fig. 7, the holder 70 has a housing 72, and a rotation plate (corresponding to a first connection part in the claims) 74 rotatably provided on a surface of the housing 72 on the side of the reel. As shown in Fig. 9, the rotation plate 74 is fixed to a rotation shaft 77, and the rotation shaft 77 is supported to be rotatable with respect to the housing 72. An insertion part 76 into which the plug 46 of the charging cable 40 is inserted is formed in the center of the rotation plate 74. A fitting concave part (corresponding to a first fitting part in the claims) 75 is formed on the outer side of the insertion part 76 of the rotation plate 74. It should be noted that a hook (not shown) is provided on the surface of the housing 72 on the side of the reel. When the reel 52 is attached to the holder 70, the hook of the housing 72 is engaged with an engagement part (not shown) (such as a concave part formed on a surface on the side of the holder) of the reel 52 to be described later. Thereby, the reel 52 does not drop off of the holder 70.

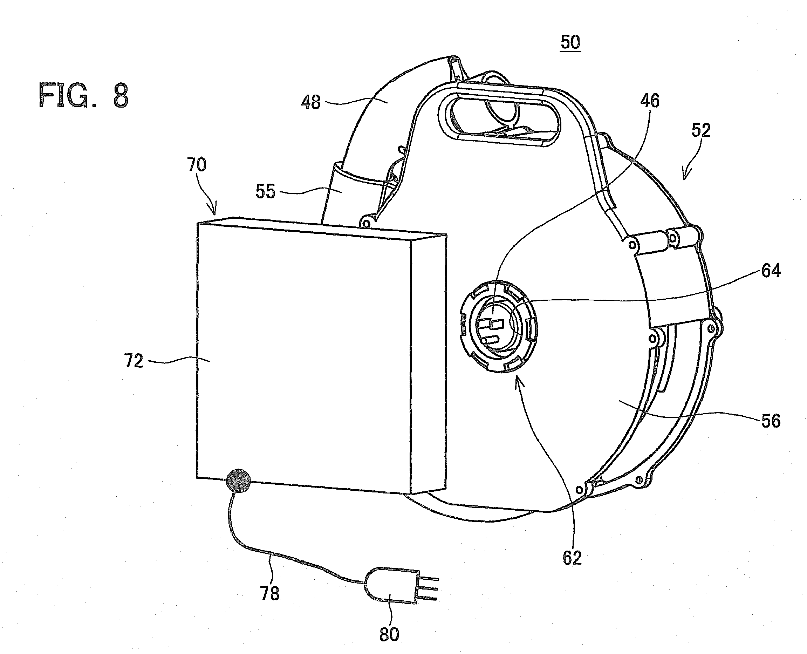

As shown in Fig. 8, the holder 70 has an electric cable (corresponding to a second connection part in the claims) 78 for connecting the external power source and the holder 70. A plug 80 is provided in a leading end of the electric cable 78. The plug 80 is inserted into the connector part (outlet) installed in the charging place. It should be noted that in a case where the electric cable 78 of the holder 70 is directly connected to the power source, there is no need for providing the plug 80 in the leading end of the electric cable 78. As shown in Fig. 9, the insertion part 76 of the rotation plate 74 and the electric cable 78 are electrically connected via a slip ring 71. That is, the insertion part 76 and the slip ring 71 are connected by a wire 73, and the electric cable 78 and the slip ring 71 are connected by a wire 79. Thereby, the insertion part 76 and the electric cable 78 are electrically connected.

As shown in Fig. 7, the reel 52 has a rotation drum 54, and a casing 56 for rotatably supporting the rotation drum 54. The cable main body 42 of the charging cable 40 is wound around an outer peripheral surface of the rotation drum 54. A charging connector 48 of the charging cable 40 is locked on a hook 55 arranged on the outer peripheral side of the rotation drum 54. The CCID 44 and the plug 46 are held on the inner side of the rotation drum 54. As shown in Fig. 8, a through hole 64 passing through from a surface on the side of the reel to a surface on the side of the holder is formed in the casing 56. The through hole 64 has the diameter larger than the plug 46 of the charging cable 40. When the cable housing apparatus 50 is seen along the rotation axis of the rotation drum 54, the insertion part 76 of the rotation plate 74, the through hole 64 of the casing 56, and the rotation axis of the rotation drum 54 are placed at the same position. A fitting convex part (corresponding to a second fitting part in the claims) 62 to be fitted to the fitting concave part 75 of the rotation plate 74 is formed around the through hole 64. It should be noted that since the through hole 64 is formed on the rotation axis line of the rotation drum 54, the CCID 44 and the plug 46 are held at positions displaced from the rotation axis line of the rotation drum 54.

In a case where charging is performed by the above cable housing apparatus 50, the reel 52 is attached to the holder 70. That is, the fitting convex part 62 formed on the surface of the reel 52 on the side of the holder is fitted to the fitting concave part 75 formed on the surface of the holder 70 on the side of the reel. Thereby, the reel 52 is attached to the holder 70. The rotation plate 74 in which the fitting concave part 75 is formed is rotatable with respect to the housing 72. Thus, the rotation plate 74 and the reel 52 can be integrated with each other and rotated with respect to the housing 72. Next, the plug 46 of the charging cable 40 is inserted into the insertion part 76 of the rotation plate 74 through the through hole 64 of the casing 56. When the plug 80 of the electric cable 78 is connected to the connector part (outlet) of the charging place in advance, the charging cable 40 and the external power source are electrically connected only by inserting the plug 46 of the charging cable 40 into the insertion part 76 of the rotation plate 74.

After the reel 52 is attached to the holder 70, the user pulls out the necessary length of the cable main body 42 from the reel 52 by grabbing and pulling the charging connector 48. At this time, the insertion part 76 is positioned on the rotation axis line of the reel 52, and the reel 52 and the rotation plate 74 are integrated with each other and rotated. Thus, a problem that the charging cable 40 is twisted or the like is not generated. Rotation torque for rotating the rotation plate 74 is transmitted from the reel 52 to the rotation plate 74 via the fitting convex part 62 and the fitting concave part 75. Thus, the torque is not applied to the charging cable 40. Thereby, the damage to the charging cable 40 is prevented. Next, the charging connector is connected to the power feeding port of the vehicle and charging of the in-vehicle battery is started. Meanwhile, when charging to the in-vehicle battery is finished, firstly, the charging connector is removed from the power feeding port of the vehicle, and then the reel 52 is rotated and the charging cable 40 (cable main body 42) is wound up on the reel 52. Next, the plug 46 of the charging cable 40 is detached from the insertion part 76 and the reel 52 is separated from the holder 70. The charging cable 40 is housed in the trunk room of the vehicle in a state where the charging cable is wound around the reel 52.

As is clear from the above description, in the cable housing apparatus 50 of the present embodiment, the holder 70 is connected to the external power source by the electric cable 78, and only by inserting the plug 46 of the charging cable 40 into the insertion part 76 of the holder 70, the external power source and the charging cable 40 can be electrically connected In a state where the plug 46 of the charging cable 40 is inserted into the insertion part 76 of the holder 70, the charging cable 40 can be pulled out from the reel 52 and the charging cable 40 can be wound up on the reel 52. Thereby, a connection task of the charging cable 40 can be extremely simply performed. Since the slip ring 71 is provided on the side of the holder 70, weight of the reel 52 to be taken along can be reduced.

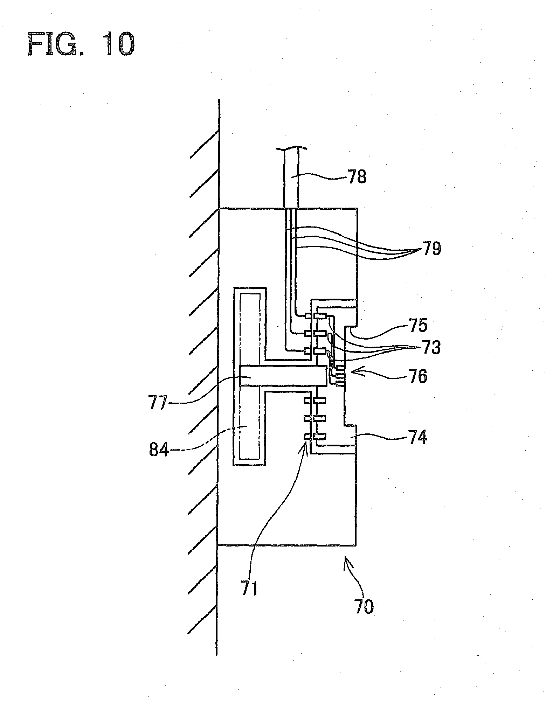

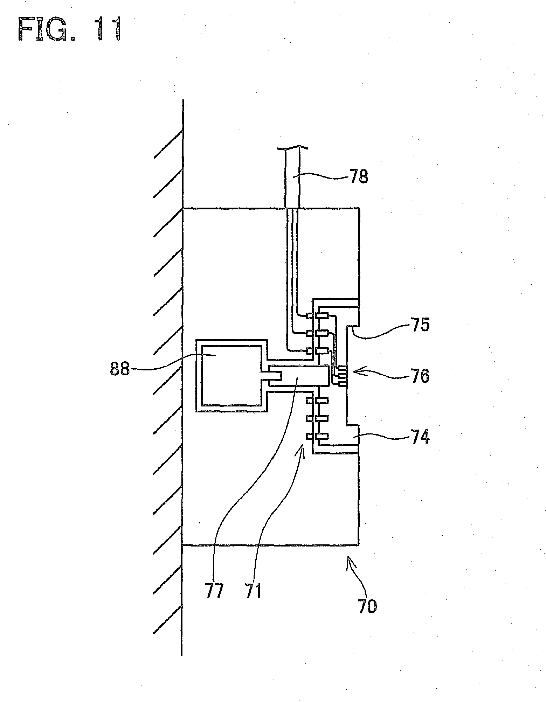

It should be noted that in the cable housing apparatus 50 of the above second embodiment, at the time of taking up the charging cable 40 on the reel 52, the reel 52 is manually rotated and the charging cable 40 is wound around the reel 52. However, as shown in Fig. 10, the rotation plate 74 and the reel 52 may be biased in the take-up direction by attaching a flat spiral spring 84 to the other end of the rotation shaft 77. That is, when the charging cable 40 is pulled out from the reel 52, the reel 52 is rotated in the cable pull-out direction against a bias force of the flat spiral spring 84. When the charging cable 40 is wound up on the reel 52, the reel 52 is rotated in the cable take-up direction by the bias force of the flat spiral spring 84. Thereby, the charging cable 40 can be automatically wound up on the reel 52. It should be noted that when the reel 52 is rotated in the pull-out direction, the reel 52 may be enabled to stop at an arbitrary position by a ratchet mechanism for example. It should be noted that in a case where the ratchet mechanism is provided, a switch for cancelling the ratchet mechanism may be separately provided, and by operating the switch, the reel 52 may be rotated in the cable take-up direction. Further, as shown in Fig. 11, by driving and rotating the rotation shaft 77 by a motor 88, the charging cable 40 may be pulled out from the reel 52 and the charging cable 40 may be wound up on the reel 52. It should be noted that an external power source may be used or an internal power source (built-in battery) may be used as a power source of the motor 88.

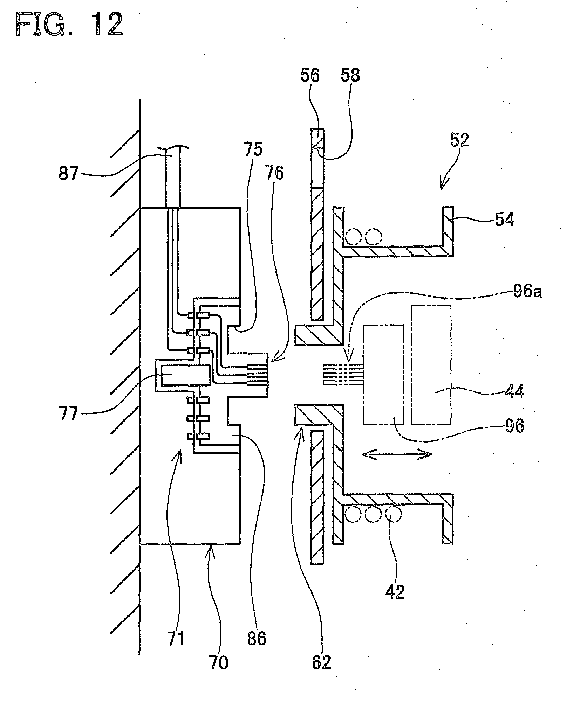

In the cable housing apparatus 50 of the above second embodiment, as shown in Fig. 7, the CCID 44 is arranged at the position displaced from the rotation axis line of the reel 52. However, as shown in Fig 12, the CCID 44 may be arranged on the rotation axis line of the reel 52. By arranging the CCID 44 on the rotation axis line of the reel 52, the diameter of the reel 52 can be reduced. It should be noted that when the CCID 44 is arranged on the rotation axis line of the reel 52, the plug 46 of the charging cable 40 is not easily directly connected to the insertion part 76 of the holder 70. Therefore, in the cable housing apparatus shown in Fig. 12, the plug 46 of the charging cable 40 is connected to an adaptor 96, and a plug (corresponding to a reel side plug in the claims) 96a electrically connected to the adaptor 96 is connected to the insertion part 76 of the holder 70. Thereby, the charging cable 40 can be connected to an electric cable (corresponding to a fourth connection part in the claims) 87 of the holder 70. It should be noted that in the cable housing apparatus shown in Fig. 12, the insertion part 76 projecting toward the side of the reel is formed in a rotation plate 84 (corresponding to a third connection part in the claims) of the holder 70, and the adaptor 96 is movable in the arrow direction in the figure. Thereby, the cable housing apparatus can be switched between (1) a state where the reel 52 is attached to the holder 70 and the insertion part 76 and the plug 96a are connected (state where the adaptor 96 is moved to the side of the holder), and (2) a state where the reel 52 is attached to the holder 70 and the insertion part 76 and the plug 96a are not connected (state where the adaptor 96 is moved to the non-holder side).

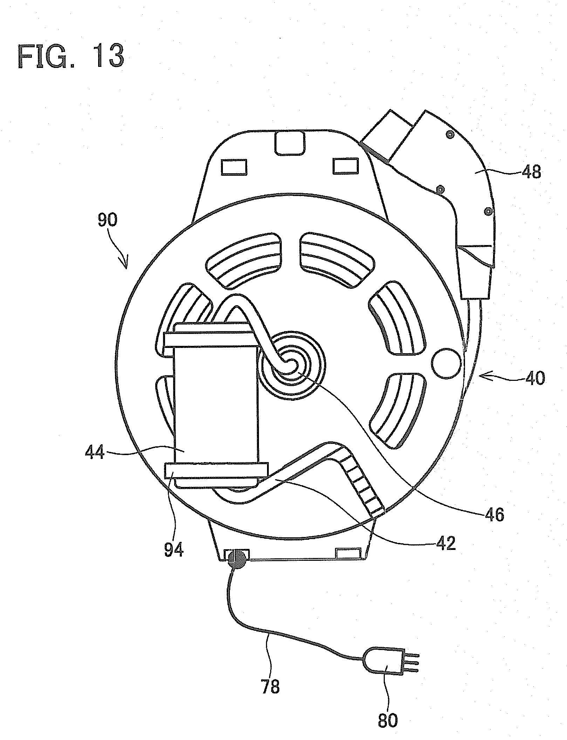

Further, as in the cable housing apparatus shown in Fig. 13, the charging cable 40 may be wound up in the radial direction of a reel 90. With such a configuration, the axial size of the reel 90 can be reduced. It should be noted that in the example shown in Fig. 13, the CCID 44 of the charging cable 40 is held by a holding member 94 provided on an end surface of the reel 90.

It should be noted that the above embodiments show the cable housing apparatuses for housing the charging cable serving as standard equipment. However, the individual techniques described in the present specification (such as the technique that the holder has the slip ring) can be applied to a cable housing apparatus in which a charging cable and a housing apparatus thereof are exclusively designed.

Specific examples of the present invention has been described in detail, however, these are mere exemplary indications and thus do not limit the scope of the claims. The art described in the claims include modifications and variations of the specific examples presented above. Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

## Claims

1. A cable housing apparatus for housing a charging cable having a charging connector provided in one end, a plug provided in the other end, and a CCID provided between the charging connector and the plug, the cable housing apparatus comprising:
a reel having an outer peripheral surface on which the charging cable is capable of being wound.

2. The cable housing apparatus according to claim 1, wherein the reel comprises a holding part capable of holding the CCID.

3. The cable housing apparatus according to claim 1 or 2, further comprising:
a holder for rotatably supporting the reel.

4. The cable housing apparatus according to claim 3, wherein the reel is detachably attached to the holder.

5. The cable housing apparatus according to claim 3 or 4, wherein
the holder comprises:
a housing;
a first connection part provided to be rotatable with respect to the housing, the first connection part to which the plug of the charging cable is detachably connected;
a second connection part provided immovably with respect to the housing and connected to an external power source; and
a slip ring arranged between the first connection part and the second connection part, the slip ring for electrically connecting the first connection part and the second connection part.

6. The cable housing apparatus according to claim 5, wherein
the first connection part comprises a rotation member rotatably supported by the housing, a first fitting part formed in the rotation member, and an insertion part formed in the rotation member, the insertion part into which the plug of the charging cable is inserted,
the reel includes a second fitting part to be fitted to the first fitting part, and
by fitting the first fitting part of the first connection part to the second fitting part of the reel, the reel and the first connection part are integrated with each other and rotated with respect to the housing.

7. The cable housing apparatus according to claim 4, wherein
the reel comprises an adaptor to which the plug of the charging cable is detachably connected, and a reel side plug connected to the adaptor, and
the holder comprises:
a housing;
a third connection part provided to be rotatable with respect to the housing, the third connection part to which the reel side plug is detachably connected;
a fourth connection part provided immovably with respect to the housing and connected to an external power source; and
a slip ring arranged between the third connection part and the fourth connection part, the slip ring for electrically connecting the third connection part and the fourth connection part.
